# EUROPEAN PATENT APPLICATION

(11) **EP 4 702 842 A1**
(43) Date of publication of application: **04.03.2026**
(21) Application number: 24796994.2
(22) Date of filing: 23.04.2024
(51) Int. Cl.: A01N 27/00, A01M 1/20, A01P 17/00

(54) **COMPOSITION, ANT CONTROL AGENT, AND CONTROL METHOD FOR ANTS**

(30) Priority: 28.04.2023 JP 2023074317
(71) Applicant: SHIN-ETSU CHEMICAL CO., LTD., Tokyo 100-0005 (JP)
(72) Inventor: SUGAWARA Yuma, Joetsu-shi, Niigata 942-8601 (JP); MIYAKE Yuki, Joetsu-shi, Niigata 942-8601 (JP); WATANABE Takeru, Joetsu-shi, Niigata 942-8601 (JP)
(74) Representative: De Vries & Metman
(86) International application number: PCT/JP2024/015830
(87) International publication number: WO 2024/225248

(57) **Abstract**

There are provided a composition having physiological activity on an ant belonging to the family Formicidae, an ant control agent effective for ant control, and an ant control method. More specifically, there are provided a composition including at least one hydrocarbon compound having 19 to 50 carbon atoms and having physiological activity on an ant belonging to the family Formicidae, a saccharide and a surfactant; an ant control agent for controlling an ant belonging to the family Formicidae, the agent including the composition and a gelling agent; and a method for controlling an ant belonging to the family Formicidae using the ant control agent.

## Description

### Technical Field

The invention relates to a composition comprising a hydrocarbon compound that an ant owns, an ant control agent (or ant control formulation), and an ant control method.

### Background Art

Ants are distributed throughout the world, and are important for nutritional circulation, decomposition processes, soil disturbance and transport of plant seeds so that they play an important role in natural ecosystems. On the other hand, the ants also have the aspects as agricultural pests, sanitary pests and forest pests that adversely affect human life. Regarding said aspects, in recent years, ants belonging to the subfamily Myrmicinae, the subfamily Dolichoderinae and the subfamily Formicinae have been devastating as pests.

The subfamily Myrmicinae includes Solenopsis spp. ("Hiari" in Japanese), Myrmica spp. and a leaf cutting ant (Atta spp. and Acromyrmex spp.).

An ant of Solenopsis invicta is known as a typical invasive alien ant, and is particularly problematic as a hygienic pest due to death and injury caused by a poison needle.

An ant of Myrmica rubra, which is one of Myrmica spp., has also invaded Canada from Europe, formed a small supercolony, affected the native ant phase, and become a problem as a hygienic pest due to the presence of a poisonous needle.

Ants of Atta spp. and Acromyrmex spp., both belonging to a leaf cutting ant, cultivate filamentous fungi in their colonies as food resources for larvae. They have the characteristics of cutting and collecting various plant substrates as fertilizers for the cultivation of fungi. They enter the agricultural landscape and cut off leaves in crowds, thereby causing serious agricultural and forestry damages in the colonized region. For these reasons, they are treated as pests.

The subfamily Dolichoderinae includes an Argentine ant (Linepithema humile), Ochetellus spp. and Technomyrmex brunneus.

An ant of Linepithema humile has become a global problem as an invasive alien ant, and forms a giant supercolony. For example, the European main, which is the largest supercolony in Europe, is also the largest supercolony in the world, extending for approximately 6000km from Portugal to southern Italy along the Mediterranean coast. Worker ants belonging to the same supercolony have the same hydrocarbon composition on their body surfaces, so that they are treated as nest mates and cooperate each other in foraging activities and expansion of the territory. The competitiveness is very strong between ant species, and in the place where this species invades and the ant density becomes high, the native ants are destroyed and most of native species disappear. Ants of Linepithema humile act in a remarkable procession, frequently invade houses, gather in foodstuffs, penetrate and destroy electronic devices, and enter a futon during sleep to cause sleep disturbances. In addition, an ant of Linepithema humile establishes a strong symbiotic relationship with fruit tree pests of the hemiptera such as scale insects, so that the ant of Linepithema humile is one of the reasons for the outbreak of these fruit tree pests in orchards. Thus, the ant of Linepithema humile also indirectly damages the agriculture.

An ant of Ochetellus glaber also invades Hawaii and others as an alien species, thereby causing a problem mainly as a house pest.

In recent years, an ant of Technomyrmex brunneus, which is an alien species that has invaded the Hachijojima island in Japan, has formed a supercolony in the Hachijojima island, and has invaded electronic devices such as outdoor units of air conditioners, thereby causing troubles.

An ant of Anoplolepis gracilipes belonging to the subfamily Formicinae is considered to be native to Africa. However, it spreads in subtropical and tropical regions, and forms a supercolony to bring a great impact on biodiversity in islands. The ant of Anoplolepis gracilipes also has the characteristics of establishing a symbiotic relationship with the hemipteran pests, thereby causing a problem as an agricultural pest.

As a method for controlling the ants belonging to the subfamily Myrmicinae, the subfamily Dolichoderinae and the subfamily Formicinae, there has been reported the control method by B.M. Drees et al. in which a bait agent is used together with an insecticide (Non-Patent Document 1). In addition, as a method for controlling ants belonging to the subfamily Dolichoderinae, there has been reported the control method (Patent Document 1) in which a nestmate recognition pheromone is used.

### Prior Art Document

### Patent Document

Patent Document 1: Japanese Patent Application Laid-Open No. 2012-250938A

### Non-Patent Document

Non-Patent Document 1: B. M. Drees et al., Insect Science, 2013, 20 (4), 429-438.

### Summary of the Invention

### Problem to be solved by the Invention

However, an insecticide (e.g., Fipronil) having a wide activity spectrum is used in the control method by B.M. Drees et al., so that many insects other than the target pest ant is killed. Thus, an environmental burden is large. In addition, use of such an insecticide for controlling an ant has been problematic in that poisoning may occur as a result of erroneous eating by infants and pets.

Moreover, the type of ant forming a supercolony such as an Argentine ant and an ant of Solenopsis invicta can be eradicated by using an existing insecticide in the early stage of colonization. However, the damage often becomes clear at a stage where the supercolony becomes large to a certain extent. Once a large network-like supercolony is spread geographically as a result of the failure in early detection and early control, even if a population belonging to the supercolony can be locally exterminated by an insecticide, ants belonging to a new colony may immediately enter from outside the control area to form a new colony. Thus, the effect of the local extermination is only temporary, and the fundamental control is impossible with the current ant control agent, which also creates a big problem.

Further, an ant control method in which an ant is allowed to bring a bait agent mixed with an insecticide into a nest is most commonly used, and is also considered to be the most effective method for controlling alien ants. However, the pesticide-containing bait agent has the following problems. When ants learn that the bait is toxic, the attractiveness is lost and the control effect is reduced. Since the ants who have been out for foraging return to their own colony only, increase of the control effect requires a large amount of bait agent for each colony in a long period of time. Because of these problems, it is difficult to continuously control the pest population. Accordingly, effective control of the alien ants by using the insecticide-containing bait agent is limited to the small colony at the initial stage of their invasion. Once the alien ants settle and expand the colony, the control effect is lowered by the above-described mechanism, thereby making the ant control difficult.

In addition, in the control method of JP 2012-250938A, a nestmate recognition pheromone that induces a repelling reaction is applied to a target Argentina ant belonging the subfamily Dolichoderinae. This control method can be effective on, for example, protection of a specific device by utilizing the repelling effect. However, this control method has no effect of killing an ant so that it is insufficient for the purpose of reducing the number of ants. In addition, since the repelling effect cannot be obtained unless the ants come into direct contact with the pheromone component, it is necessary to surround the periphery of the object with a pheromone component without any gaps, which is impractical as an ant control method.

For the above reasons, there has been a demand to develop an ant control agent and an ant control method for reducing the number of ants by using only a substance having low toxicity and having a low possibility of developing resistance without using an insecticide. Regarding the type of ant that forms a supercolony, there is no method for suppressing the damages other than early detection and early control using an insecticide, and thus there is a demand for a new control method for reducing the damages in an area where a supercolony has already been formed.

The invention has been made in view of the above circumstances, and an object of the invention is to provide, for example, an ant control agent and an ant control method by using a compound having a physiological activity on the ant belonging to the family Formicidae such as the ants belonging to the subfamily Myrmicinae, the subfamily Dolichoderinae and the subfamily Formicinae, or by using a composition containing said compound, so as to reduce the number of ants in a colony and destroy the network of supercolony.

### Solution to the Problem

As a result of intensive studies to achieve the above object, the inventors have found that when an ant belonging to the family Formicidae (hereinafter also simply referred to as "ant") such as the ant belonging to any one of the subfamily Myrmicinae, the subfamily Dolichoderinae and the subfamily Formicinae is brought into contact with a compound having physiological activity on the ant such as an activity of inhibiting the nestmate recognition and an activity of inducing an attack on the same species, or a mixture containing said compound, attack on the same species is induced so that the number of ants in the colony can be reduced. In addition, when a composition (hereinafter also referred to as a "physiologically active composition") containing a saccharide, a hydrocarbon compound having 19 to 50 carbon atoms (hereinafter also referred to as a "hydrocarbon compound") and a surfactant is used for controlling ants, the contact probability between the composition and the target ant can be enhanced without causing a repellent reaction such as one caused by use of the hydrocarbon compound alone. Further, when an ant control agent formed by adding a gelling agent to the above-described composition is used, an ant is allowed to effectively transport the ant control agent into an ant colony, so that an attack action on the same species can be induced among many workers and consequently, the colony can be weakened. The invention has been made based on these findings.

In one aspect of the invention, there is provided a composition comprising at least one hydrocarbon compound having 19 to 50 carbon atoms and having physiological activity on the ant belonging to the family Formicidae; a saccharide; and a surfactant.

In another aspect of the invention, there is provided an ant control agent for the ant belonging to the family Formicidae, the agent comprising said composition and a gelling agent.

In the other aspect of the invention, there is provided a method for controlling the ant belonging to the family Formicidae by using said ant control agent.

### Effect of the Invention

According to the invention, there can be provided a composition having physiological activity on the ant belonging to the family Formicidae, and an ant control agent effective for controlling the ant. In addition, by using said ant control agent, the entry of the ant into a house can be prevented without using a highly toxic insecticide. Further, by using said ant control agent, the population of the colony can be reduced and this species can be directly controlled. Moreover, regarding a supercolony-forming species, since the colony treated with said ant control agent is separated from the supercolony network due to the change in the hydrocarbon composition on the body surface of the ant, fight occurs also between the colonies, and the cooperative relationship within the supercolony can be destroyed.

### Brief Description of Drawings

[Figure 1] Figure 1 shows a test arena.
[Figure 2] Figure 2 shows the biting times for biting the synthetic-hydrocarbon-treated individual and the control individual for 20 minutes.
[Figure 3] Figure 3 shows the relationship between the biting time in which the worker is attacked and the death ratio of the worker killed by the attack.
[Figure 4] Figure 4 shows the number of worker individuals that ate the physiologically active composition (treatment bait) in Example 1.
[Figure 5] Figure 5 shows the biting time when the control bait and the hydrocarbon-treated bait were used in Example 2.
[Figure 6] Figure 6 shows the apparatus used in the edibility test of Example 3.
[Figure 7] Figure 7 shows the numbers of bait-eating individuals when the control bait and the treatment bait were used in Example 3.
[Figure 8] Figure 8 shows the numbers of bait-collecting individuals when the control bait and the treatment bait were used in Example 3.
[Figure 9] Figure 9 shows the apparatus used in Example 4.
[Figure 10] Figure 10 shows the number of dead individuals when the control bait and the treatment bait were used in Example 4.

### Mode for Carrying Out the Invention

There is provided a composition comprising at least one hydrocarbon compound having 19 to 50 carbon atoms and having physiological activity on an ant belonging to the family Formicidae, a saccharide, and a surfactant, wherein physiological activity includes disruption of the nestmate recognition and induction of attacking each other. As a result, the ant can be controlled. For example, the composition or the ant control agent produced by using the composition is efficiently brought into contact with the ant to allow the composition or the ant control agent to adhere to the inside and/or outside of the body surface of the ant and/or to be absorbed at the inside and/or outside of the body surface of the ant; and then the composition or the ant control agent is effectively brought back to the colony to inhibit the nestmate recognition in the colony and induce the nestmate attack each other in the colony. As a result, the number of ants in the colony can be reduced.

Embodiments of the term "contact" include physical touch between the ant and the composition or ant control agent, i.e., the contact between the ant and the composition or ant control agent; and eating the ant control agent. In other words, "contact" means the transfer of the composition or the component of the ant control agent to the body surface and/or the inside of the body of the ant. The detection of a physiologically active compound contained in the ant control agent as a signal by a sensory organ of the ant such as antennae is also treated as "contact". The term "contact" also includes the secondary sensing by the other nestmate of at least a portion of the composition or of the component of the ant control agent after the at least portion is transferred to the other nestmate. When a nestmate exhibits an aggressive action or the like on an ant who has brought the composition or the component of the ant control agent back to the colony, this action is included in the effect of the ant control agent.

Here, "bring ... back to the colony" means, but is not limited to, that an ant having the composition or at least one component of the ant control agent attached to a body surface of the ant returns to a colony, and/or that an ant having the composition or at least one component of the ant control agent in the inside of its body such as a mandibular gland after eating it returns to a colony.

Examples of the compound that induces attack on the same ant species belonging to the family Formicidae include at least one hydrocarbon compound having 19 to 50 carbon atoms, having physiological activity on the ant and being present on the body surface of the ant; and a hydrocarbon compound having 19 to 50 carbon atoms not being present on the body surface of the ant but having the same function as that of the hydrocarbon compound having 19 to 50 carbon atoms present on the body surface of the ant. Hereinafter, at least one hydrocarbon compound having 19 to 50 carbon atoms contained in a hydrocarbon composition present on the body surface of ant will be described as an example.

An ant belonging to the family Formicidae distinguishes the same colony individual from the different colony individual based on the difference in the component ratio of the hydrocarbon composition on the body surface of the ant, and has a nestmate recognition mechanism of inducing attack to and/or exclusion action on the different colony individual. Thus, when a hydrocarbon compound is brought into contact with the body surface of an ant to artificially change the component ratio of the composition present on the body surface, the ant having the hydrocarbon ratio of the body surface composition changed will be attacked. For example, the posterior pharyngeal gland is a reservoir organ of hydrocarbon compounds synthesized in the body of ant, and contains a slight amount of bait-derived hydrocarbon compound even under natural conditions. The bait containing an excessive hydrocarbon compound also disturbs the hydrocarbon composition ratio in the posterior pharyngeal gland, and an ant whose body surface hydrocarbon composition ratio is changed by self-grooming will be attacked by a nestmate. When a hydrocarbon compound derived from a bait adheres to the body surface of the other ant individual and spreads through allogrooming behaviors in a colony, an attack to the ants subjected to the allogrooming will be also induced.

The hydrocarbon compound may be a compound extracted from an ant belonging to the family Formicidae. It is preferably an artificially produced compound. By using the artificially produced compound, the preferable productivity may be ensured.

Examples of the hydrocarbon compounds having 19 to 50 carbon atoms include nonadecane, icosane, henicosane, docosane, tricosane, tetracosane, pentacosane, hexacosane, heptacosane, octacosane, nonacosane, triacontane, hentriacontane, dotriacontane, tritriacontane, tetratriacontane, pentatriacontane, hexatriacontane, heptatriacontane, octatriacontane, nonatriacontane, tetracontane, hentetracontane, dotetracontane, tritetracontane, tetratetracontane, pentatetracontane, hexatetracontane, heptatetracontane, octatetracontane, nonatetracontane, and pentacontane. One or some of the hydrogen atoms of these hydrocarbon compounds may be substituted with a methyl group or the like, and one or some of the carbon-carbon single bonds of these hydrocarbon compounds may be replaced by a carbon-carbon double bond or a carbon-carbon triple bond. The hydrocarbon compound having 19 to 50 carbon atoms may be used alone or in combination of two or more. Examples of the combination of two or more include liquid paraffin, which is a mixture of hydrocarbon compounds, the mixture comprising any of the hydrocarbon compounds having 19 to 50 carbon atoms. The liquid paraffin is a mixture of linear saturated hydrocarbon compounds having a wide range of carbon atoms (e.g., the range of 24 to 40 carbon atoms) overlapping with the range of 19 to 50 carbon atoms and branched saturated hydrocarbon compounds, so that it is useful as a source of the hydrocarbon compound having 19 to 50 carbon atoms. The liquid paraffin is also useful for an ant whose hydrocarbon compounds on the body surface are unknown or uncertain.

Since the inclusion of the hydrocarbon compound on the body surface of the ant to be controlled tends to make it easier to cause attack and/or exclusion behavior, the same hydrocarbon compound as one present on the body surface of the ant to be controlled is preferred among the above compounds. The hydrocarbon compound is preferably one or more selected from the hydrocarbon compounds present on the body surface.

The ant belonging to the family Formicidae is preferably the ant belonging to the subfamily Myrmicinae, the subfamily Dolichoderinae or the subfamily Formicinae. As typical examples, there are provided the hydrocarbon compounds present on the body surfaces of the Solenopsis spp. ("Hiari" in Japanese), Solenopsis geminata, Myrmica rubra, Myrmica ruginodis, and Atta sexdens, which belong to the subfamily Myrmicinae: Acromyrmex subterraneus, which is one of Acromyrmex spp.; an Argentine ant, which belongs to the subfamily Dolichoderinae; and Formica truncorum, which belongs to the subfamily Formicinae. The hydrocarbon compound is not limited to the above examples because it includes one or more hydrocarbon compounds that are not yet identified.

Examples of the hydrocarbon compound present on the body surface of an ant of Solenopsis invicta include a linear saturated hydrocarbon compound such as n-heptacosane; and a saturated hydrocarbon compound having branched methyl group or groups such as 3-methylheptacosane, 5-methylheptacosane, 7-methylheptacosane, 9-methylheptacosane, 13-methylheptacosane, 3,7-dimethylheptacosane, 3,9-dimethylheptacosane, 3,11-dimethylheptacosane, 13,15-dimethylheptacosane, 4,8-dimethyloctacosane, 4,10-dimethyloctacosane, and 4,12-dimethyloctacosane.

Examples of the hydrocarbon compound present on the body surface of an ant of Solenopsis geminata include an unsaturated hydrocarbon compound such as Z-9-tricosene and Z-9-pentacosene.

Examples of the hydrocarbon compound present on the body surface of an ant of Myrmica rubra include a linear saturated hydrocarbon compound such as n-nonadecane, n-pentacosane, n-hexacosane, n-heptacosane and n-nonacosane; a saturated hydrocarbon compound having branched methyl group or groups such as 5-methylpentacosane, 13-methylnonacosane, 5,9-dimethylpentacosane, 5,11-dimethylpentacosane, 9,13-dimethylnonacosane, 9,15-dimethylnonacosane and 9,17-dimethylnonacosane; and an unsaturated hydrocarbon compound such as pentacosene, heptacosene and 9-nonacosene.

Examples of the hydrocarbon compound present on the body surface of an ant of Myrmica ruginodis include a linear saturated hydrocarbon compound such as n-heptacosane, n-octacosane, n-nonacosane and n-hentriacontane; and a saturated hydrocarbon compound having branched methyl group or groups such as 5-methylnonacosane, 9,13-dimethylnonacosane, 13,17-dimethyltritriacontane and 13,19-dimethyltritriacontane.

Examples of the hydrocarbon compound present on the body surface of an ant of Atta sexdens include a linear saturated hydrocarbon compound such as n-pentacosane, n-hexacosane, n-heptacosane and n-nacosane; a saturated hydrocarbon compound having branched methyl group or groups such as 9-methyltriacontane, 9-methylhentriacontane, 9-methyldotriacontane, 9-methyltritriacontane, 7,11-dimethyltriacontane, 7,11-dimethylnonatriacontane, 3,7,11-trimethylhentriacontane, 3,7,11-trimethyldotriacontane, 3,7,11-trimethyltritriacontane, 3,7,11-trimethylpentatriaconane, 4,8,12-trimethyltetratriacontane and 4,8,12-trimethylhexatriacontane; and an unsaturated hydrocarbon compound such as Z-9-nonadecene and tricosadiene.

Examples of the hydrocarbon compounds present on the body surface of an ant of Acromyrmex subterraneus, which is one of Acromyrmex spp. include a saturated hydrocarbon compound having branched methyl group or groups such as 11-methylheptacosane, 13-methylheptacosane, 10-methyloctacosane, 12-methyloctacosane, 14-methyloctacosane, 11-methylnonacosane, 13-methylnonacosane, 15-methylnonacosane, 12-methyltriacontane, 14-methyltriacontane, 11-methylhentriacontane, 13-methylhentriacontane, 15-methylhentriacontane, 10-methyldotriacontane, 11-methyltritriacontane,13-methyltritriacontane, 15-methyltritriacontane, 17-methyltritriacontane, 11,15-dimethylheptacosane, 11,13-dimethylnonacosane, 11,17-dimethylnonacosane, 11,15-dimethylnonacosane, 13,17-dimethylnonacosane, 10,14-dimethyltriacontane, 11,15-dimethylhentriacontane, 11,17-dimethylhentriacontane, 14,16-dimethyldotriacontane, 12,16-dimethyldotriacontane and 11,17-dimethyltritriacontane.

Examples of the hydrocarbon compound present on the body surface of an ant of Linepithema humile include a linear saturated hydrocarbon compound such as n-heptadecane, n-heptacosane, n-octacosane, n-nonacosane and n-hentriacontane; and a saturated hydrocarbon compound having branched methyl group or groups such as 3-methylhentriacontane, 5-methylhentriacontane, 13-methylhentriacontane, 15-methylhentriacontane, 5,13,15-trimethylhentriacontane, 5,13,17-trimethylhentriacontane, 13-methyltritriacontane, 15-methyltritriacontane, 17-mehtyltritriacontane, 11,17-dimethyltritriacontane, 11,19-dimethyltritriacontane, 13,17-dimethyltritriacontane, 13,19-dimethyltritriacontane, 15,17-dimethyltritriacontane, 15,19-dimethyltritriacontane, 17,19-dimethyltritriacontane, 5,15-dimethyltritriacontane, 5,17-dimethyltritriacontane, 5-methylpentatriacontane, 13-methylpentatriacontane, 15-methylpentatriacontane, 17-methylpentatriacontane, 11,17-dimethylpentatriacontane, 11,19-dimethylpentatriacontane, 13,17-dimethylpentatriacontane, 13,19-dimethylpentatriacontane,15,17-dimethylpentatriacontane, 15,19-dimethylpentatriacontane, 17,19-dimethylpentatriacontane, 5,15-dimethylpentatriacontane, 5,17-dimethylpentatriacontane, 13-methylheptatriacontane, 15-methylheptatriacontane, 17-methylheptatriacontane, 19-methylheptatriacontane, 5,15-dimethylheptatriacontane, 5,17-dimethylheptatriacontane, 5,13,17-trimethyltritriacontane; 5,13,17-trimethylpentatriacontane, 5,13,19-trimethylpentatriacontane, 5,15,17-trimethylpentatriacontane, 5,15,19-trimethylpentatriacontane, 3,13,15-trimethylpentatriacontane, 3,13,17-trimethylpentatriacontane; 3,13,19-trimethylpentatriacontane; 3,15,17-trimethylpentatriacontane, 3,15,19-trimethylpentatriacontane, 5,13,17-trimethylheptatriacontane, 5,13,19-trimethylheptatriacontane, 5,15,17-trimethylheptatriacontane, 5,15,19-trimethylheptatriacontane, 3,13,15-trimethylheptatriacontane, 3,13,17-trimethylheptatriacontane; 3,13,19-trimethylheptatriacontane, 3,15,17-trimethylheptatriacontane and 3,15,19-trimethylheptatriacontane.

Examples of the hydrocarbon compound present on the body surface of an ant of Formica truncorum include a linear saturated hydrocarbon compound such as n-pentacosane, n-hexacosane, n-octacosane, n-nonacosane and n-hentriacontane; and an unsaturated hydrocarbon compound having branched methyl group or groups such as 3-methylpentacosane, 9-methylpentacosane, 11-methylpentacosane, 13-methylpentacosane, 3-methylheptacosane and 3-methylhentriacontane; and an unsaturated hydrocarbon compound such as 9-pentacosene, 9-heptacosene, 9-nonacosene and 9-hentriacontene.

A method for selecting a hydrocarbon compound having 19 to 50 carbon atoms may comprise steps of, for example, extracting with hexane the hydrocarbon composition on a body surface of a colony individual to be controlled, analyzing a component ratio of the extracted hydrocarbon composition by gas chromatography-mass spectrometry (GC-MS) or the like, and selecting such a hydrocarbon compound having 19 to 50 carbon atoms as to make a body surface hydrocarbon composition differ from the body surface hydrocarbon composition originally possessed by the individual.

The hydrocarbon compound having 19 to 50 carbon atoms is preferably an artificially synthesized compound. By using the synthesized compound, preferable economy may be ensured. The hydrocarbon compound having 19 to 50 carbon atoms may contain an impurity which is inevitable in the production.

The hydrocarbon compound having 19 to 50 carbon atoms has high viscosity when it is in liquid form. The hydrocarbon compound having a large number of carbon atoms is in solid form at room temperature. For these reasons, it is difficult to attach the hydrocarbon compound to the body surface of an ant as it is. Furthermore, when the hydrocarbon compound having a high melting point is directly attached to an ant, the hydrocarbon compound solidifies on the body surface of the ant, so that the ant is suffocated to death before being attacked by the same species. Hence, the inventors focus on preparing an emulsion by dispersing the hydrocarbon compound in water by using a surfactant. Consequently, it becomes possible to efficiently attach the hydrocarbon compound to the ant, and/or to allow the ant to efficiently absorb the hydrocarbon compound, without solidification of the hydrocarbon compound inside and outside the body surface of the ant.

Further, the emulsification of the hydrocarbon compound allows the saccharide component, which is an essential component of the composition, to easily dissolve in the emulsion of the hydrocarbon compound, so that an ideal ant control agent can be provided.

A natural surfactant or a synthetic surfactant may be used as the surfactant. Examples of the surfactant include an anionic surfactant, a cationic surfactant, an amphoteric surfactant and a nonionic surfactant.

Examples of the anionic surfactant include fatty acid salts such as sodium oleate, potassium oleate, sodium laurate and potassium laurate; alkylbenzenesulfonate salts such as sodium methylbenzenesulfonate, potassium methylbenzenesulfonate, sodium ethylbenzenesulfonate and potassium ethylbenzenesulfonate; alpha-sulfo fatty acid methyl ester salts such as α-sulfo fatty acid methyl ester sodium salt and α-sulfo fatty acid methyl ester potassium salt; alpha-olefinsulfonates such as sodium α-olefinsulfonate and potassium α-olefinsulfonate; naphthalenesulfonates such as sodium naphthalenesulfonate and potassium naphthalenesulfonate; dialkylsulfosuccinates such as sodium dimethylsulfosuccinate, potassium dimethylsulfosuccinate, sodium diethylsulfosuccinate and potassium diethylsulfosuccinate; alkylsulfates such as sodium octylsulfate, potassium octylsulfate, sodium dodecylsulfate and potassium dodecylsulfate; polyoxyethylene alkyl sulfates; and phosphates such as sodium phosphate and potassium phosphate.

Examples of the cationic surfactant include aliphatic amine salts, aliphatic quaternary ammonium salts, heterocyclic quaternary ammonium salts, and aromatic quaternary ammonium salts.

Examples of the amphoteric surfactant include betaine-type amphoteric surfactants such as lauryldimethylbetaine; fatty acid amidopropyl betaine-type amphoteric surfactants; carboxymethylamine-type amphoteric surfactants such as laurylaminodiacetate; imidazolinium-type amphoteric surfactants; and phospholipids such as lecithin.

Examples of the nonionic surfactant include sorbitan ester surfactants; polyoxyethylene sorbitan fatty acid ester surfactants such as Tween20; glycerin ester surfactants; polyoxyalkylene alkyl phenyl ether surfactants such as Triton X-100, Triton X-114, Nonidet P-40 and Igepal CA-630; polyoxyalkylene alkyl ether surfactants such as sec-alcohol ethoxylate; polyoxyalkylene fatty acid ester surfactants; glycosides such as saponin; and cellulose derivatives such as methyl cellulose and hydroxypropyl methyl cellulose.

Although the optimum type of surfactant varies depending on a target ant or the installation location of ant control agent, the amphoteric surfactant is preferred, and the phospholipid such as lecithin is more preferred.

An amount of the surfactant is preferably from 0.0001 to 10000 parts by mass, more preferably from 0.0005 to 1000 parts by mass, still more preferably from 0.001 to 100 parts by mass, and particularly preferably from 0.01 to 30 parts by mass, relative to 100 parts by mass of the total amount of the at least one hydrocarbon compound having 19 to 50 carbon atoms (e.g., when there are used two or more types of hydrocarbon compounds, the total amount of the hydrocarbon compounds).

An amount of water is preferably from 10 to 1000000 parts by mass, more preferably from 50 to 500000 parts by mass, still more preferably from 100 to 100000 parts by mass, and particularly preferably from 300 to 20000 parts by mass, relative to 100 parts by mass of the total amount of the at least one hydrocarbon compound having 19 to 50 carbon atoms (e.g., when there are two or more types of hydrocarbon compounds, the total amount of the hydrocarbon compounds).

An ant belonging to the family Formicidae is attracted to the bait which is rich in a saccharide, and shows the foraging behaviors.

Examples of the saccharide include monosaccharides such as glucose and fructose; disaccharides such as sucrose and trehalose; and trisaccharides such as raffinose and melezitose. These are commercially available after generally purified. However, a saccharide before purification (e.g., raw sugar which is one of the disaccharides), containing potassium, calcium, magnesium and vitamin B groups together with sucrose, can also be used. One type of saccharide, or optionally two or more types of saccharides may be used.

The content of the saccharide may be appropriately adjusted within a range not impairing the effect of the invention. For example, it is preferably from 5 to 1000000 parts by mass, more preferably from 15 to 500000 parts by mass, still more preferably from 20 to 100000 parts by mass, and particularly preferably from 50 to 20000 parts by mass, relative to 100 parts by mass of the total amount of the at least one hydrocarbon compound having 19 to 50 carbon atoms (e.g., when there are two or more types of hydrocarbon compounds, the total amount of the hydrocarbon compounds).

Examples of a preferred combination of the hydrocarbon compound having 19 to 50 carbon atoms, the surfactant and the saccharide include a combination of the hydrocarbon compound which is one or more selected from the group consisting of mono-, di- and tri-methylpentatriacontane, mono-, di-and tri-methylheptatriacontane, heptacosane, tritriacontane and nonatriacontane, or which is liquid paraffin containing one or more selected from said group; lecithin as the surfactant; and sugar (sucrose) as the saccharide, with respect to an ant (e.g., an Argentine ant) belonging to the subfamily Dolichoderinae. The examples include a combination of the hydrocarbon compound which is one or more selected from the group consisting of heptacosane, tritriacontane and nonatriacontane, or which is liquid paraffin containing one or more selected from said group; lecithin as the surfactant, and sugar (sucrose) as the sacchride, with respect to an ant (e.g., Myrmica ruginodis) belonging to the subfamily Myrmicinae.

In addition to the saccharide, an optional lipid may be added to the composition. The lipid induces an ant to transport the bait substrate and facilitates the ant to bring the ant control agent into the colony.

Examples of the lipid that facilitates the ant to bring the ant control agent into the colony include a triacylglycerol contained in vegetable oils and fats such as castor oil, linseed oil, salad oil, corn oil, soybean oil, sesame oil, rapeseed oil, safflower oil, sunflower oil, palm oil, olive oil, peanut oil, almond oil, grape seed oil, jojoba oil, rosehip oil, avocado oil, hazelnut oil and orange oil. Examples of the fatty acid constituting the triacylglycerol include myristic acid, palmitoleic acid, palmitic acid, linolenic acid, oleic acid, stearic acid, linoleic acid, eicosapentaenoic acid, arachidonic acid and behenic acid. The fatty acid is preferably palmitic acid, linolenic acid, oleic acid or stearic acid.

An amount of the lipid is preferably from 0 to 20 parts by mass, more preferably from 0 to 5 parts by mass, and still more preferably from 0 to 3 parts by mass, relative to 100 parts by mass of the total amount of the at least one hydrocarbon compound having 19 to 50 carbon atoms (e.g., when there are two or more types of hydrocarbon compounds, the total amount of the hydrocarbon compounds).

The composition may contain, as an additive, an antioxidant such as 2,6-di-tert-butyl-4-methylphenol (BHT), butylhydroxytoluene, butylhydroxyanisole, hydroquinone and vitamin E; and a UV absorber such as 2-hydroxy-4-octyloxybenzophenone and 2-(2'-hydroxy-3'-tert-butyl-5'-methylphenyl)-5-chlorobenzotriazole (HBMCBT).

Regarding an amount of the additive, for example, the antioxidant is preferably from 0 to 50 parts by mass, more preferably from 0 to 20 parts by mass, and still more preferably from 0 to 5 parts by mass, and the UV absorber is preferably from 0 to 50 parts by mass, more preferably from 0 to 20 parts by mass, and still more preferably from 0 to 5 parts by mass, relative to 100 parts by mass of a total amount of the at least one hydrocarbon compound having 19 to 50 carbon atoms (e.g., when there are two or more types of hydrocarbon compounds, the total amount of the hydrocarbon compounds).

In order to further limit the ant species to be attracted, a species-specific ant attractant such as trailpheromone may be added to the ant control agent. Examples include (Z,E)-α-farnesene for an ant of Solenopsis spp. ("Hiari" in Japanese) belonging to the subfamily Myrmicinae; and Z-9-hexadecenal for an Argentine ant belonging to the subfamily Dolichoderinae.

An amount of the attractant is preferably from 0 to 10 parts by mass, more preferably from 0 to 1 part by mass, and still more preferably from 0 to 0.1 parts by mass, relative to 100 parts by mass of a total amount of the at least one hydrocarbon compound having 19 to 50 carbon atoms (e.g., when where there are two or more types of hydrocarbon compounds, the total amount of the hydrocarbon compounds).

The method for producing the composition is not particularly limited. The composition may be produced, for example, by mixing the at least one hydrocarbon compound having 19 to 50 carbon atoms, the surfactant (or an aqueous surfactant solution), the saccharide, optional water, an optional lipid, an optional additive and an optional ant attractant using a stirring device such as a homogenizer. The hydrocarbon compound and the surfactant may be added in the form of an emulsion in which the hydrocarbon compound is emulsified with a surfactant.

Next, the ant control agent containing a compound having physiological activity on an ant belonging to the family Formicidae will be described. The ant control agent comprises the composition and a gelling agent. In order to facilitate the quantitative installation of the ant control agent and the transport of the ant control agent by an ant, the ant control agent is desirably in the form of a gel, and particularly desirably in the form of a hydrogel. The ant control agent is formed, for example, by mixing the composition and the gelling agent into a gel. The shape of the ant control agent is not particularly limited.

Examples of the gelling agent for gelling the ant control agent include natural polymers such as gelatin, agarose, carrageenan, guar gum, xanthan gum, roast bean gum, sodium alginate, calcium alginate and pectin; a polysaccharide and its analog such as sodium carboxymethylcellulose; and an artificial water-absorbing polymers such as polyacrylic acid, sodium polyacrylate, polyaspartic acid and polyacrylamide. By using the artificial water-absorbing polymer as a gelling agent, the ant control agent may be formed into a paste-like shape, and may be installed in a non-horizontal place such as a surface of a tree or a wall surface of a building. The gelling agent is preferably gelatin, agarose, sodium carboxymethylcellulose, polyacrylic acid, sodium polyacrylate, polyaspartic acid or polyacrylamide. By using these preferable gelling agents, preferable production may be ensured.

An amount of the gelling agent is preferably from 0.001 to 1000 parts by mass, more preferably from 0.01 to 500 parts by mass, still more preferably from 0.1 to 100 parts by mass, and particularly preferably from 1 to 15 parts by mass, relative to 100 parts by mass of a total amount of the at least one hydrocarbon compound having 19 to 50 carbon atoms (e.g., when there are two or more types of hydrocarbon compounds, the total amount of the hydrocarbon compounds).

An ant control agent comprising an attractant such as a saccharide may further comprise an optional preservative and/or an optional fungicide in order to prevent denaturation by microorganisms such as bacteria.

Examples of the preservative that prevents denaturation by microorganisms such as bacteria include benzoic acid, sodium benzoate, sorbic acid, potassium sorbate, propionic acid, calcium propionate, sodium propionate and polylysine.

Examples of the fungicide include imazalil, o-phenylphenol, sodium o-phenylphenate, thiabendazole, fludioxonil and 3-iodo-2-propynylbutylcarbamate.

An amount of the preservative and the fungicide is preferably from 0 to 100 parts by mass, more preferably from 0 to 50 parts by mass, and still more preferably from 0 to 10 parts by mass, relative to 100 parts by mass of a total amount of the at least one hydrocarbon compound having 19 to 50 carbon atoms (e.g., when there are two or more types of hydrocarbon compounds, the total amount of the hydrocarbon compounds).

Next, there will be described a method for weakening or destroying a colony, the method comprising a step of installing the ant control agent containing a compound having physiological activity on an ant belonging to the family Formicidae in a region (e.g., a field or a house) to be controlled so as to cause the ant nestmates to kill each other.

Although this control method is generally applicable to an ant belonging to the family Formicidae, it is desirable to apply the method to an ant belonging to the subfamily Myrmicinate, the subfamily Dolichoderinae and the subfamily Formicinae, which are particularly problematic as invading insects.

Examples of the subfamily Myrmicinae include Solenopsis spp. ("Hiari" in Japanese) such as Solenopsis invicta, Solenopsis geminata and Solenopsis richteri; Wasmania spp. such as Wasmania auropunctata; a leaf cutting ant such as Atta sexdens, Atta laebigata, Atta texana, Atta colombica, Atta bisphaerica, Atta capiguara, Atta cephalotes, Atta goiana, Atta opaciceps, Atta robusta, Atta vollenweideri, Acromyrmex octospinosus, Acromyrmex balzani, Acromyrmex echinator, Acromyrmex niger, Acromyrmex lundii, Acromyrmex ambiguus, Acromyrmex versicor, Acromyrmex striatus, Acromyrmex ameliae, Acromyrmex aspersus, Acromyrmex coronatus, Acromyrmex crassispinus, Acromyrmex diasi, Acromyrmex disciger, Acromyrmex fowleri, Acromyrmex fracticornis, Acromyrmex heyeri, Acromyrmex hispidus, Acromyrmex hystrix, Acromyrmex landolti, Acromyrmex laticeps, Acromyrmex lobicornis, Acromyrmex nigrosetosus, Acromyrmex nobilis, Acromyrmex pubescens, Acromyrmex rugosus, and Acromyrmex subterraneus; Myrmica spp. such as Myrmica rubra and Myrmica ruginodis; Cardiocondyla spp. such as Cardiocondyla obscurior; Erromyrma spp. such as Erromyrma latinodis; Monomorium spp. such as Monomorium floricola and Monomorium pharaonis; Pheidole spp. such as Pheidole indica, Pheidole megacephala, Pheidole moerens, Pheidole obscurithorax, Pheidole para, Pheidole proxima, Pheidole rugosula and Pheidole vigilans; Strumigenys spp. such as Strumigenys membranifea; Tetramorium spp. such as Tetramorium bicarinatum, Tetramorium grassii, Tetramorium lanuginosum, Tetramorium simillimum, Tetramorium tsushimae and Trichomyrmex destructor; and Solenopsis spp. ("Akakamiari" in Japanese) such as Solenopsis geminata;.

Examples of the ant belonging to the subfamily Dolichoderinae include an Argentine ant (Linepithema humile); Ochetellus spp. such as Ochetellus glaber; Tapinoma spp. such as Tapinoma indicum, Tapinoma melanocephalum and Tapinoma sessile; and Technomyrmex spp. such as Technomyrmex albipes, Technomyrmex difficilis and Technomyrmex brunneus.

Examples of the ant belonging to the subfamily Formicinae include Anoplolepis spp. such as Anoplolepis gracilipes; Brachymyrmex spp. such as Brachymyrmex patagonicus; Camponotus spp. such as Camponotus variegatus; Lasius spp. such as Lasius neglectus; Lepisiota spp. such as Lepisiota frauenfeldi; Nylanderia spp. such as Nylanderia fulva and Nylanderia pubens; Paratrechina spp. such as Paratrechina longicornis; and Plagiolepis spp. such as Plagiolepis alluaudi.

Among these, Solenopsis invicta, Myrmica spp., Solenopsis geminata, Pheidole spp., an Argentine ant, Ochetellus spp., Tapinoma spp., Technomyrmex spp., Anoplolepis spp., Paratrechina spp. and a leaf cutting ant, which have invaded each country and have been threatening as a sanitary and agricultural pest, are preferably targeted. Solenopsis invicta, an Argentine ant, a leaf cutting ant, Myrmica spp. and Anoplolepis spp. are particularly preferably targeted.

Effective ant control can be expected by using the above-mentioned nestmate recognition mechanism, more specifically by bringing the ant belonging to the family Formicidae into contact with the at least one hydrocarbon compound having 19 to 50 carbon atoms as the compound which provokes an attack on the same species, to change the body surface hydrocarbon composition of the ant brought into contact.

The working mechanism of the ant control agent is not limited to any description in this specification, but can be specifically described, for example, as follows. Although the ant control agent contains a hydrocarbon compound which generates a repellent reaction, an ant belonging to the family Formicidae is attracted to the saccharide contained in the ant control agent and comes into contact with the ant control agent. In this case, the hydrocarbon compound contained in the ant control agent adheres to the body surface and/or the inside of the ant, and/or accumulates on the body surface and/or inside the body of the ant. When the ant comes into contact with the ant control agent, the component ratio of the hydrocarbon compound on the body surface of the ant changes. Accordingly, when a nestmate comes into contact with said ant, for example, by grooming, the nestmate recognizes said ant as an enemy and attacks said ant, leading finally to death inside or outside the colony.

A worker ant who does labor outside the colony at high risk of death, such as foraging activities, territory monitoring and transport of garbage generated inside the colony to the outside, is called an outside-worker. Among the worker ants, elderly individuals are assigned as the outside workers. When an outside-worker comes into contact with the ant control agent, the outside-worker is no longer recognized as a nestmate and is unable to return to the colony. As a result, for example, the food required for larval growth is not supplied sufficiently, the territory is reduced, and nutritional and hygienic conditions within the colony are deteriorated. Thus, external works that are important for maintaining the colony are delayed so that the entire colony can be significantly damaged.

Addition of a lipid to the ant control agent is not essential. However, the ant control agent comprising the lipid can be more efficiently brought into the colony, thereby increasing the number of worker ants within the colony who come into to contact with the ant control agent. As a result, fight between the nestmates occurs, so that the population of the colony can be more efficiently reduced. The hydrocarbon compound is transferred from a first worker ant who has come into contact with the ant control agent to a second worker ant who has not come into direct contact with the ant control agent during the killing between the nestmates, thereby also changing the component ratio of the hydrocarbon composition on the body surface of the second worker ant. As a result, killing between the nestmates can be induced with a time gap.

A hydrocarbon composition on the body surface of an ant belonging to the family Formicidae differs from species to species. The components of the hydrocarbon composition, which are important for the nestmate recognition, also differ from species to species. Therefore, by limiting the hydrocarbon compound or compounds contained in the ant control agent to the same hydrocarbon compound or compounds as those on the body surface of the target pest ant, a control effect aimed only at the target pest ant can be expected.

For example, an ant of Solenopsis invicta belonging to the subfamily Myrmicinae and an ant of Linepithema humile belonging to the subfamily Dolichoderinae reduce the number of native ants with vigorous fecundity and aggressiveness as invasive alien ants, thereby causing a significant adverse effect on the biodiversity in the invaded region. However, the use of the ant control agent containing only the body surface hydrocarbon compound or compounds of these alien ants or mainly containing the body surface hydrocarbon compound or compounds of these alien ants enables the control of only the alien ants while protecting the native ants. In addition, by using an ant control agent containing a mixture of some hydrocarbon compounds, the mixture containing body surface hydrocarbon compounds of these alien ants, multiple control having control effects on many ants can be achieved. In the multiple control, a control effect corresponding to the ant density can be expected. For example, selective control of alien ant or ants can be achieved in a place where the density of alien ant or ants is high.

Regarding an ant of Solenopsis invicta belonging to the subfamily Myrmicinae and an ant of Linepithema humile belonging to the subfamily Dolichoderinae, a small number of colonies having the same genetic origin have invaded from the origin into an alien region in which huge super colonies are formed in various places. The super colony is formed by connecting several blood-related colonies. Each colony cooperates in foraging activities and participation in territorial disputes, which are largely involved in the vigorous fecundity specific to an invasive alien ant. Ants in the same blood-related supercolony also have the same body surface hydrocarbon compositions, so they are recognized as the same nestmates and cause no intraspecies competition. The ant control agent alters the hydrocarbon composition of the ant brought into contact with the ant control agent, so that it destroys the cooperative relationship within the supercolony based on the sameness of the body surface hydrocarbon composition. Fight due to nestmate recognition inhibition is caused not only within the colony but also between the supercolonies, so that a more effective control effect on alien ants can be expected.

In addition, an ant of Solenopsis invicta belonging to the subfamily Myrmicinae and an ant of Linepithema humile belonging to the subfamily Dolichoderinae have a strong symbiotic relationship with hemipteran pests (e.g., aphids, and scale insects) that are problematic in orchards, and strongly protect the hemipteran pests from natural enemies. Accordingly, release of natural enemies, which are one of the biological control methods, does not improve the control effect and exacerbates the damage to fruit trees. Consequently, a large amount of insecticide spraying is required to control the hemipteran pests. When this ant control agent is installed in an orchard, the number of the above-mentioned ants (accompanying ants) protecting the hemipteran pests from the natural enemy is reduced, and the activity of the natural enemy is activated. Consequently, the hemipteran pests can be controlled without using the insecticide.

The composition, the ant control agent, and the ant control method using the ant control agent in accordance with the invention are preferably free from an insecticide. They reduce the number of ants within a colony by provoking an attack on the same species, so that if an ant whose body surface hydrocarbon composition has been changed is killed by an insecticide, a reduction in the number of the ants due to the provoked attack would not occur. Thus, the use of the insecticide cannot lead to the decline of the colony. Therefore, it is important for the ant control to allow the ants to return the colony alive without using the insecticide. For this purpose, it is preferable not to use the insecticide. In the control of hemipteran pests by indirect use of the ant control agent, it is important to allow the natural enemy insects to prey on or parasitize the hemipteran pests from which the accompanying ants have been removed. Accordingly, the use of insecticide is desirably avoided from the viewpoint of the protection of the natural enemy.

Regarding the composition, the ant control agent, and the ant control method using the ant control agent in accordance with the invention, it is possible to cause the fight between colonies without using a large amount of the ant control agent in many places, especially with respect to ants which are control-resistant and form a supercolony. Thereafter, the number of deaths due to the fight is increased in each colony without the ant control agent, thereby achieving the control. Thus, it is economically advantageous.

### Examples

Hereinafter, the invention will be more specifically described with reference to Examples. However, it should not be construed that the invention is limited to or by Examples.

### Experiment 1 (Bioassay for Component Ratio Changes of Body Surface Hydrocarbon Composition)

Argentina ants were collected in a Linepithema humile colonization area and bioassays were performed in the colonization area. Argentina ants used in the tests were randomly collected around the entrances to the nest cavities of multiple colonies and from lines of ants for foraging. The Argentine ant individuals to be used in the tests showed no aggressiveness between the colonies under natural conditions, and were confirmed to belong to the same supercolony by the haplotype network analysis using base sequence data of COI-COII region 1700 bp of mtDNA. They were presumed to be derived systematically from one of five supercolonies confirmed to be colonized in Japan.

A hydrocarbon mixture was prepared by mixing 5-methylpentatriacontane, 17-methylpentatriacontane, 5,13,17-trimethylpentatriacontane and liquid paraffin (product of Kozakai Pharmaceutical Co., Ltd.), which were found to be contained in the bodysurface hydrocarbon composition of the Argentine ant in the preceding studies. Liquid paraffin (product of Kozakai Pharmaceutical Co., Ltd.) contained straight chain saturated hydrocarbon compounds having 24 to 40 carbon atoms, including heptacosane, triacontane and nonatriacontane, and branched saturated hydrocarbon compounds. The liquid paraffin was used also in Examples below. An aqueous surfactant solution in which lecithin was dissolved in distilled water was prepared. The hydrocarbon mixture was dispersed in the aqueous surfactant solution to prepare an aqueous synthetic hydrocarbon solution, which was then subjected to the tests. The mass ratio of each component in the aqueous synthetic hydrocarbon solution was 185: 3: 3: 3: 1: 1000 for Liquid Paraffin: 5-methylpentatriacontane: 17-methylpentatriacontane: 5,13,17-trimethylpentatriacontane: lecithin: distilled water.

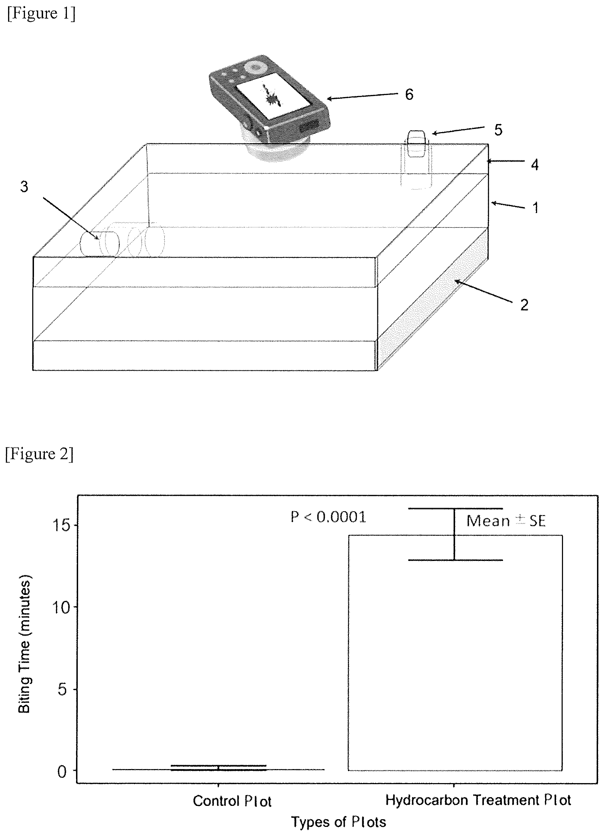

Tests were conducted using a test arena 1 shown in Figure 1. The test arena 1 was a transparent polystyrene rectangular container having a width of 89 mm, a depth of 70 mm and a height of 23 mm. Gypsum 2 having a height of 5 to 7 mm was placed at the bottom of the test arena 1. A vent port 3 having a diameter of 8 mm was formed in the center of one side surface of the test arena 1. The vent port 3 was a cylinder made of polyvinyl chloride, and extended into the inside of the test arena 1. An air-permeable plastic cap was attached to the end portion of the vent port 3, thereby preventing the ants from escaping. The test arena 1, which is a square container, had a transparent polystyrene lid 4. An openable and closable ant introduction inlet 5 and a video tracking device 6 were installed in the lid 4. The gypsum 2 contained 10 ml of water.

Randomly collected Argentine ant workers were introduced into the test arena 1, where there were introduced one hundred and one ant individuals per test arena. Out of the one hundred and one individuals, one worker to be subjected to the hydrocarbon compound treatment was randomly selected, and then was fed a sucrose solution in which a red pigment had been dissolved to make its abdomen larger in red. This marking allowed the selected worker to be easily distinguished from the other nestmates. The 20 µl of the synthetic hydrocarbon aqueous solution was contained in a small brush, and then the small brush was applied to the body surface of the worker marked by the above method, thereby obtaining a hydrocarbon-treated individual. In another test arena, one worker was selected out of one hundred and one individuals, and was treated in the same manner as in the above method except that an aqueous surfactant solution without the synthetic hydrocarbon was applied to the body surface of the selected worker, thereby obtaining a control individual. A test plot in which one hydrocarbon-treated individual was introduced into a test arena in which one hundred nestmates had been placed was assigned as a hydrocarbon treatment plot. A test plot in which one control individual was introduced into a test arena in which one hundred nestmates had been placed was assigned as a control plot (Figure 1).

The behaviors of the nestmates on the hydrocarbon-treated individual were visually observed for 20 minutes, and the accumulated time of the nestmates' aggressive behaviors (biting, etc.) on the hydrocarbon-treated individual was recorded using a free software JWatcher capable of quantitatively recording the animal behaviors. Whether hydrocarbon-treated individual was killed by the nestmates within 30 minutes from the start of the test was also visually observed and recorded. As a criterion of whether the worker was killed, it was judged that the worker died when the head was separated from the thorax as a result of biting behavior by the nestmate. The same observations were also made in a test arena (i.e. control plot) where the control individual was introduced, and the behavioral data were recorded. The test was repeated six times in the hydrocarbon-treated plot and in the control plot, respectively. The behaviors for 20 minutes from the start of observation were shot with a video camera, and were saved as a video record for later re-verification. All of the Argentine ant workers and test materials used in Examples 1 and 2 were subjected to insecticidal treatments after the tests, and were disposed in the colonization area.

The biting time toward the hydrocarbon-treated individual or the control individual for 20 minutes is shown in Figure 2. The biting time is expressed as MEAN (mean value) ± SE (standard error). The hydrocarbon-treated individual was subjected to aggressive behaviors such as vigorous biting by nestmates immediately after introduction, and the total length of biting time in the treatment plot was statistically significantly longer than that in the control plot (likelihood ratio test: P-value < 0.0001).

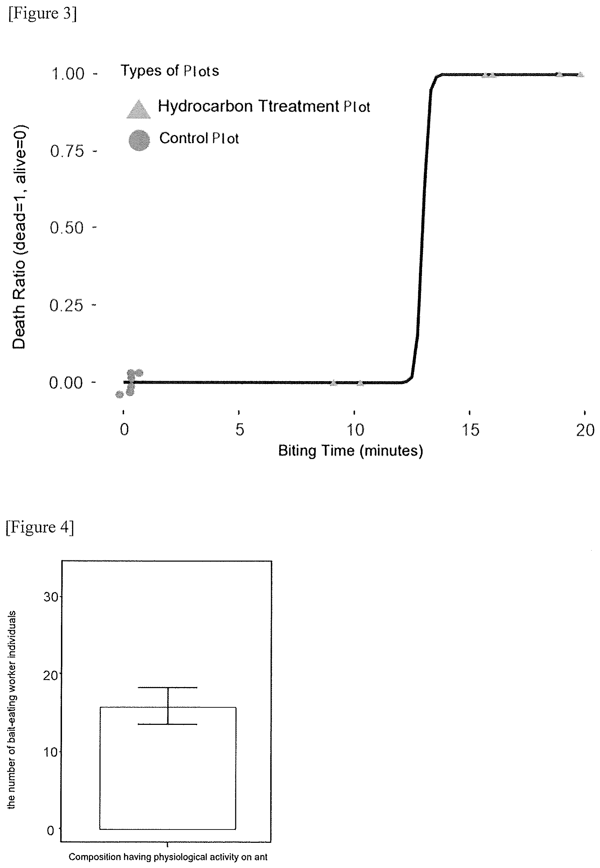

Next, the relationship between the biting time that the worker was subjected to after the introduction and the ratio of death caused by the attack is shown in Figure 3. Dead individuals were attacked by nestmates in significantly longer times than surviving individuals (likelihood ratio test: P-value < 0.0001).

Presuming that death of the introduced worker is less likely to occur in the control plot than in the hydrocarbon treatment plot, a two-by-two contingency table such as the following Table 1 was prepared, and then Fisher's exact test was performed. An odds ratio was significantly less than 1 (P-value < 0.05), and probability of the worker being killed by nestmates as a result of the hydrocarbon treatment was estimated to be higher. It should be noted that an odds ratio of greater than 1 indicates a higher probability of worker death in the control plot without synthetic hydrocarbons, while an odds ratio of 1 indicates the same probability of worker death in the control plot as in the hydrocarbon treatment plot.

Thus, attachment of the hydrocarbon compound to the body surface of Argentina ant worker disturbs the nestmate recognition, and successfully caused killing between nestmates belonging to the same supercolony.

**[Table 1]**

| treatment | test results | | total number of individuals |
|---|---|---|---|
| | dead | alive | |
| absence of hydrocarbon | 0 | 6 | 6 |
| presence of hydrocarbon | 4 | 2 | 6 |

### <Example 1: Edibility test of a composition having physiological activity on an ant>

Even if a hydrocarbon compound and an aqueous solution thereof are presented to the ants as they are, only severe repellent reactions occur, and eating behavior is not exhibited at all. For this reason, a composition (treatment bait) having physiological activity on an ant and containing liquid paraffin (product of Kozakai Pharmaceutical Co., Ltd.): 5-methylpentatriacontane: 17-methylpentatriacontane: 5,13,17-trimethylpentatriacontane: lecithin: raw sugar: distilled water in a mass ratio of 80: 1: 1: 1: 10: 10000: 10000 was prepared, and the edibility thereof by Argentine ants was evaluated using a test arena 1 shown in Figure 1. The bait dish (30 mm by 30 mm square) was made of aluminum foil, and aliquots of the physiologically active composition were placed at eight locations having equal intervals along the three sides of the bait dish using a micropipette, wherein one drop (i.e., 10 µl aliquot) was placed at each of the eight locations. The bait dish was placed in the test arena 1, which was loaded with 50 workers of Argentina ants who had been fasted for 3 days after collection. The bait dish was placed on the gypsum 2 containing 10 ml of water, in the test arena 1 which was a rectangular container having a width of 89 mm and a depth of 70 mm. The center of the bait dish was located on one diagonal line of the test arena 1 and at the midpoint between the intersection point of the two diagonal lines and the end point close to the vent port 3. An ant introduction inlet 5 and a video tracking device 6 were installed at the lid 4.

The movements of workers in the arena were observed, and the total number of workers who showed eating behaviors was counted in a period of 10 minutes after the bait dishes was placed. The tests were repeated three times, and the behaviors for 10 minutes from the start of observation was shot with a video camera, and saved as a video record for later re-verification. The number of bait-eating worker individuals who gathered for eating for 10 minutes from the start of the test is shown in Figure 4. Contrary to use of the hydrocarbon compound and the aqueous solution thereof alone, it was confirmed that a certain number of worker individuals gathered to eat the composition having the physiologically activity on an ant.

### < Example 2: Coating test of a composition having physiologically activity on an ant>

A 20 µl small brush was allowed to absorb the hydrocarbon treatment bait prepared in Example 1, and was applied to an Argentine ant worker whose abdomen was marked red by the method of Experiment 1 to form a hydrocarbon-bait-treated individual. Similarly, a bait obtained by removing a hydrocarbon compound from the treatment bait prepared in Example 1, i.e., a bait (a control bait) obtained by dissolving raw sugar in an aqueous lecithin solution containing no hydrocarbon compound, was applied to an Argentine ant worker whose abdomen was marked red to form a control-bait-treated individual. The hydrocarbon-bait-treated individual or the control-bait-treated individual (hereinafter also referred to as the bait-treated individual) was introduced into a test arena containing one hundred nestmates.

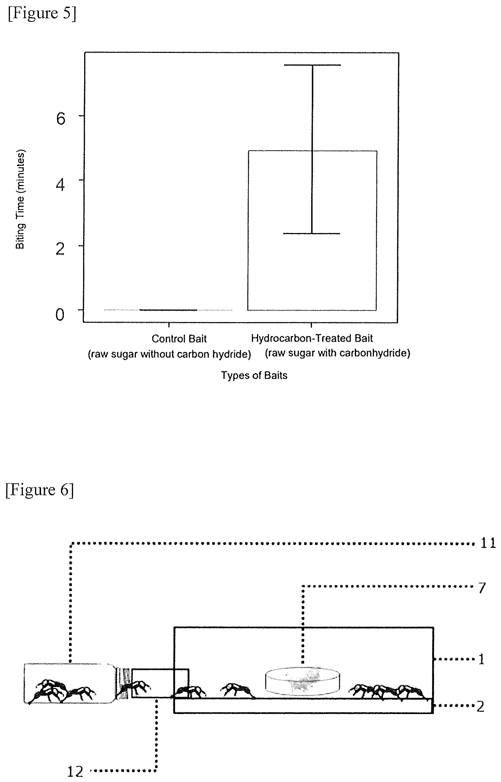

The behaviors of the nestmates to the bait-treated individual were visually observed for 20 minutes from the introduction of the bait-treated individual, and the accumulated time of the nestmates' aggressive behaviors (biting, etc.) to the bait-treated individual was recorded using a free software JWatcher capable of quantitatively recording animal behaviors. The tests were repeated three times in each of the hydrocarbon-bait treatment plot and the control-bait treatment plot, and the behaviors for 20 minutes from the start of observation was shot with a video camera, and saved as a video record for later re-verification. Figure 5 shows the biting time by nestmates to the bait-treated individual. The biting time by nestmates to the hydrocarbon-bait-treated individual were significantly longer than the biting time by nestmates to the control-bait-treated individual in the control plot (likelihood ratio test: P-value < 0.0001). By using the composition having physiological activity on an ant, hydrocarbon compounds can be attached to the body surface of the worker who is brought into contact with the composition. As a result, the nestmate recognition inhibition can be caused.

### < Example 3: Edibility test of an ant control agent>

Bioassays were carried out using the worker ants of Myrmica ruginodis belonging the subfamily Myrmicinae and belonging to the same colony. In this test, an aqueous synthetic hydrocarbon solution was prepared by mixing liquid paraffin (product of Kozakai Pharmaceutical Co., Ltd.), water and lecithin in a homogenizer, and then subjected to addition of sucrose as a saccharide to form an aqueous sucrose solution containing the hydrocarbon compound. The aqueous sucrose solution containing the hydrocarbon compound was absorbed by granules of sodium polyacrylate (product name: Newsorb, produced by Newstone International L.L.C.), which was an artificial water-absorbing polymer. As a result, a granular ant control agent (treatment bait) was produced. The ant control agent containing the artificial water-absorbing polymer had a mass ratio of 200: 1: 1000: 1200: 12 for liquid paraffin: lecithin: distilled water: sucrose: sodium polyacrylate. There was also produced another agent (control bait) in the same manner as the above except for the absence of sucrose was also prepared. Before being absorbed by the artificial water-absorbing polymer, the aqueous synthetic hydrocarbon solution was applied to a worker of Myrmica ruginodis, and the reactions of nestmates were observed. Consequently, it was confirmed that the biting behaviors and the like were induced in the same manner as observed in Argentina ants.

The apparatus used in this edibility test is shown in Figure 6. Twenty outside workers collected from the same colony were placed in a 6 cc screw-thread vial 11, and stored at a constant temperature of 25°C in an incubator having a length of 16 mm and a depth of 8 mm for 3 days without food to allow them to settle as a simple colony 11. Then, using a test arena 1 shown in Figure 1, 0.5 g of the treatment bait or the control bait in a polyethylene small bait dish 7 was placed in the center of the test arena 1 and on the gypsum 2. The gypsum 2 contained an aqueous 10ml. The above 11 was connected to the test arena 1 having the treatment bait or the control bait therein by way of a polyethylene tube 12 to allow the ants to move freely. The test started at this point. The test time was 10 minutes, workers' behaviors were visually observed, and the number of workers who had eating behaviors such as licking or biting the pieces of the bait in the bait dish was counted to obtain the number of bait-eating individuals. The number of individuals who held the pieces of the treatment or control bait in their jaw and then took them out of the dish was counted to obtain the number of bait-collecting individuals. The test was repeated three time by using the treatment baits and three time by using the control baits to make a comparison of the number of eating-behavior individuals and the number of the bait-collecting individuals. The ant behaviors for 10 minutes from the start of observation were shot with a video camera, and saved as a video record for later re-verification.

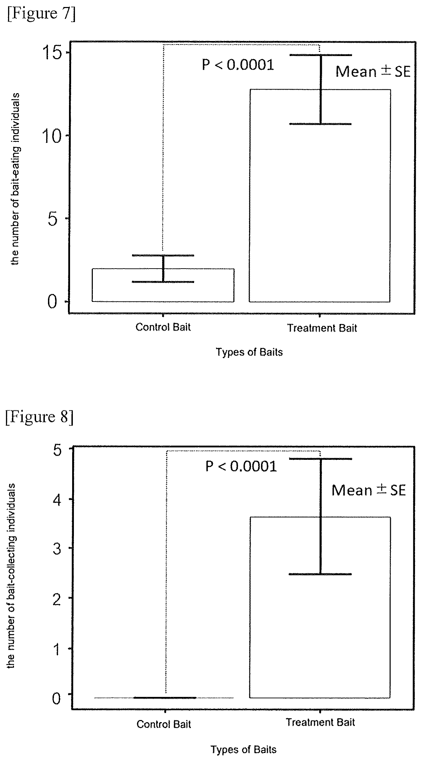

The number of bait-eating individuals and the number of the bait-collecting individuals observed in the 10-minute test period with respect to each of the installed treatment and control baits are shown in Figures 7 and 8. The number of bait-eating worker individuals was significantly higher in the placement of the treatment bait than in the placement of the control bait (likelihood ratio test: P-value < 0.0001). When the treatment bait was placed, there were observed a certain number of bait-collecting individuals who held the pieces of the treatment bait in their jaw, took them out of the dish and returned to the screw-thread vial as the simply colony. On the other hand, there was observed no bait-collecting individual in the placement of the control bait. Although the treatment bait contained the same hydrocarbon compounds as those of the control bait, the sucrose in the treatment bait allows the ants to eat the ant control agent (treatment bait) with almost no repellent reaction, and showed even the transportation behaviors of bringing the pieces of the treatment bait back to the nest. Hence, the addition of sucrose as a saccharide successfully suppressed the repellent reaction against the hydrocarbon compounds.

### <Example 4: Inducement test of ant control agent for killing each other>

The following experiment was carried out using the ants of Myrmica ruginodis in order to verify whether continuous giving of the ant control agent changes the hydrocarbon composition on the body surface and induces the killing between nestmates. Liquid paraffin (Kozakai Pharmaceutical Co., Ltd.) as hydrocarbon compounds was mixed with an aqueous surfactant solution in which lecithin was dissolved in water. Raw sugar as a saccharide was dissolved in the resulting mixture to prepare a composition physiological activity on the ants. Agarose as a gelling agent was added to the composition physiological activity on the ants, then stirred with a hot stirrer heated to 35°C at 140 rpm for 2 hours, and heated in a 500W microwave oven for 1 minute to dissolve the agarose in the composition. The 2 ml of the resulting solution was poured into a polyethylene bait dish before being cooled, allowed to stand for 2 minutes, and gelled to obtain an ant control agent (hereinafter, also referred to as "treatment bait"). The treatment bait had a mass ratio of 200: 1: 1000: 140: 6 for liquid paraffin: lecithin: distilled water: raw sugar: agarose. The agent (control bait) was prepared in the same manner as the preparation of the hydrocarbon-treated bait except for the absence of liquid paraffin.

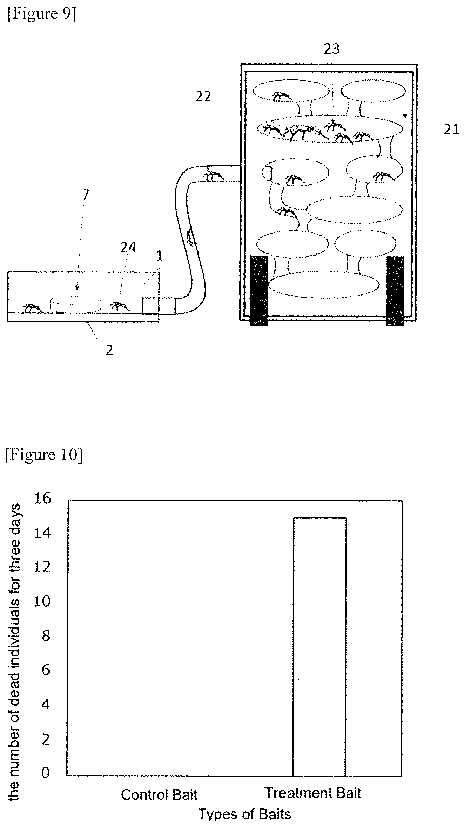

In the test, as shown in Figure 9, there was used a Myrmica ruginodis colony containing one queen ant 22 and fifty ants consisting of inside workers 23 and outside workers 24 in a gypsum nest 21 (Ant-machine No. 2 mini, Antroom). The gypsum nest 21 was connected to a rectangular polystyrene arena 1 having gypsum sheet 2 placed at its bottom as shown in Figure 1. The arena 1 was utilized by outside workers as a bait place or a garbage disposal place. The gypsum contained 10 ml of water. The control bait was placed in the bait dish 7 at the bait place, while the colony was stored at a constant temperature of 25°C in the incubator having a length of 16 mm and a depth of 8 mm to allow the ants to move freely for 3 days. Three days after the start of the test, the number of workers discarded at the garbage disposal site in the arena was counted to obtain the number of dead individuals in the control bait installation period. Then, the control bait was removed from bait dish 7, and the treatment bait in the bait dish 7 was placed in the same location, while the colony was stored at a constant temperature of 25°C in the incubator again for 3 days to allow the ants to move freely. In the same manner as the placement of the control bait, three days after the start of the test, the number of dead worker individuals in the arena 1 was counted to obtain the number of dead individuals in the treatment bait placement period. The colony was taken out of the incubator at the fixed time (PM 1:00 to 2:00) every day in the test period and the ant activity in the area was observed in a laboratory at 25°C. The arena was shot with a video camera for three days, and the results were saved as a video record for later re-verification.

The number of dead worker individuals per plot three days after the start of the test is shown in Figure 10. The workers' response to the treatment or control bait was good, confirming that many outside workers emerged from the inside of the colony within five minutes from the placement of the treat or control bait to exhibit the active foraging behaviors. No killing between workers was observed in the placement of the control bait for three days, and the number of dead worker individuals was zero three days after the start of the test. On the other hand, in the placement of the treatment bait, there were frequent attacks between outside workers after two days from the bait placement, and 15 outside workers (30% of all workers in the colony) died due to attacking each other after three days from the start of the test. It is considered that continuous giving of the ant control agent (treatment bait) containing hydrocarbon compounds changed the hydrocarbon composition on the body surface of the worker visiting for foraging, and inhibited the nestmate recognition, thereby inducing killing each other. Thus, it is considered that continuous giving of the ant control agent containing the composition containing a saccharide, a hydrocarbon compound and a surfactant induces the inhibition of nestmate recognition and increases the death ratio of workers due to killing each other, thereby achieving the function of the ant control agent.

### Description of the reference numerals

- 1: test arena
- 2: gypsum
- 3: vent port
- 4: lid
- 5: ant introduction inlet
- 6: video tracking device
- 7: bait dish
- 11: screw-thread vial colony
- 12: polyethylene tube
- 21: gypsum nest
- 22: queen ant
- 23: inside workers
- 24: outside workers

## Claims

1. A composition comprising
at least one hydrocarbon compound having from 19 to 50 carbon atoms and having physiological activity on an ant belonging to the family Formicidae,
a saccharide, and
a surfactant.

2. The composition according to claim 1, wherein the ant belonging to the family Formicidae is an ant belonging to the subfamily Myrmicinae, subfamily Dolichoderinae or subfamily Formicinae.

3. The composition of claim 1, further comprising a lipid.

4. The composition according to claim 1, wherein the at least one hydrocarbon compound is the same as at least one hydrocarbon compound contained in a hydrocarbon composition present on a body surface of the ant.

5. The composition according to claim 1, wherein the at least one hydrocarbon compounds is selected from the group consisting of nonadecane, Z-9-nonadecene, icosane, henicosane, docosane, tricosane, Z-9-tricosene, tricosadiene, tetracosane, pentacosane, Z-9-pentacosene, 5,9-dimethylpentacosane, 5,11-dimethylpentacosane, Z-9-pentacosene, 5,11-dimethylpentacosane, hexacosane, heptacosane, 3-methylheptacosane, 5-methylheptacosane, 7-methylheptacosane, 9-methylheptacosane, 11-methylheptacosane, 13-methylheptacosane, 3,7-dimethylheptacosane, 3,9-dimethylheptacosane, 3,11-dimethylheptacosane, 11,15-dimethylheptacosane, 13,15-dimethylheptacosane, heptacosene, octacosane, 10-methyloctacosane, 12-methyloctacosane, 14-methyloctacosane, 4,8-dimethyloctacosane, 4,10-dimethyloctacosane, 4,12-dimethyloctacosane, nonacosane, 11-methylnonacosane, 13-methylnonacosane, 15-methylnonacosane, 11,13-dimethylnonacosane, 11,17-dimethylnonacosane, 11,15-dimethylnonacosane,13,17-dimethylnonacosane, 9,13-dimethylnonacosane, 9,15-dimethylnonacosane, 9,17-dimethylnonacosane, 9-nonacosene, triacontane, 9-methyltriacontane, 12-methyltriacontane, 14-methyltriacontane, 7,11-dimethyltriacontane, 10,14-dimethyltriacontane, hentriacontane, 9-methylhentriacontane, 11-methylhentriacontane, 13-methylhentriacontane, 15-methylhentriacontane, 11,15-dimethylhentriacontane, 11,17-dimethylhentriacontane, 3,7,11-trimethylhentriacontane, dotriacontane, 9-methyldotriacontane, 10-methyldotriacontane,14,16-dimethyldotriacontane, 12,16-dimethyldotriacontane, 3,7,11-trimethyldotriacontane, tritriacontane, 9-methyltritriacontane, 11-methyltritriacontane, 13-methyltritriacontane, 15-methyltritriacontane, 17-methyltritriacontane, 11,17-dimethyltritriacontane, 5,13,17-trimethyltritriacontane, 3,7,11-trimethyltritriacontane, tetratriacontane, pentatriacontane, 5-methylpentatriacontane, 15-methylpentatriacontane, 17-methylpentatriacontane, 5,13,17-trimethylpentatriacontane, 3,7,11-trimethylpentatriacontane, 4,8,12-trimethyltetratriacontane, hexatriacontane, 4,8,12-trimethylhexatriacontane, heptatriacontane, 15-methylheptatriacontane, 17-methylheptatriacontane, 19-methylheptatriacontane, 5,13,17-trimethylheptatriacontane, octatriacontane, nonatriacontane, 7,11-dimetliylnonatriacontane, tetracontane, hentetracontane, dotetracontane, tritetracontane, tetratetracontane, pentatetracontane, hexatetracontane, heptatetracontane, octatetracontane, nonatetracontane and pentacontane.

6. The composition of claim 1, wherein the saccharide is selected from the group consisting of monosaccharides, disaccharides and trisaccharides.

7. The composition of claim 3, wherein the lipid is triacylglycerol.

8. An ant control agent for controlling an ant belonging to the family Formicidae, the agent comprising
the composition according to any one of claims 1 to 7 and
a gelling agent.

9. The ant control agent according to claim 8, wherein the gelling agent is a natural polymer or an artificial polymer.

10. The ant control agent according to claim 8, wherein the gelling agent is a natural polymer selected from the group consisting of gelatin, agarose, carrageenan, guar gum, xanthan gum, roast bean gum, sodium alginate, calcium alginate, pectin and sodium carboxymethylcellulose; or an artificial polymer selected from the group consisting of polyacrylic acid, sodium polyacrylate, poly(aspartic acid) and polyacrylamide.

11. The ant control agent according to claim 8, comprising no insecticidal component.

12. A method for controlling an ant belonging to the family Formicidae, using the ant control agent according to claim 8.

13. The control method according to claim 12, comprising a step of placing or spraying the ant control agent in an area or field to be controlled from the ant, or around an object to be controlled from the ant, or around or inside a colony of the ant, to allow the hydrocarbon compound to be attached to or absorbed by the ant through contact between the ant and the ant control agent.

14. The control method according to claim 12, wherein a pesticide is not used.
